## Europäisches Patentamt
## European Patent Office
## Office européen des brevets

(11) Veröffentlichungsnummer: **0 328 916**
**A2**

# EUROPÄISCHE PATENTANMELDUNG

(21) Anmeldenummer: **89101397.1**

(22) Anmeldetag: **27.01.89**

(51) Int. Cl.⁴: **F16G 5/18**

(30) Priorität: **19.02.88 DE 3805182**

(43) Veröffentlichungstag der Anmeldung:
**23.08.89 Patentblatt 89/34**

(84) Benannte Vertragsstaaten:
**DE FR GB IT NL SE**

(71) Anmelder: **FORD-WERKE AKTIENGESELLSCHAFT**
**Werk Köln-Niehl Henry-Ford-Strasse**
**Postfach 60 40 02**
**D-5000 Köln 60(DE)**

(84) **DE IT NL SE**

Anmelder: **FORD MOTOR COMPANY LIMITED**
**Eagle Way**
**Brentwood Essex CM13 3BW(GB)**

(84) **GB**

Anmelder: **FORD FRANCE SOCIETE ANONYME**
**344 Avenue Napoléon Bonaparte B.P. 307**
**F-92506 Rueil Malmaison Cedex(FR)**

(84) **FR**

(72) Erfinder: **Schmidt, Vinzenz**
**Neusser Gasse 36**
**D-5024 Pulheim 3(DE)**

(74) Vertreter: **Ritzkowsky, Harald, Dipl.-Ing. et al**
**Ford-Werke Aktiengesellschaft**
**Patentabteilung NH/DRP Henry-Ford-Strasse**
**D-5000 Köln 60(DE)**

(54) **Profilkörper-Gliederband für stufenlos regelbare Kegelscheiben-Umschlingungsgetriebe.**

(57) Bei einem Profilkörper-Gliederband für stufenlos regelbare Kegelscheiben-Umschlingungsgetriebe mit einer Vielzahl von Profilkörpern, die mit benachbarten Profilkörpern über etwa auf der Neutrallinie des Gliederbandes liegende Verbindungsflächen gelenkig zu einem endlosen Umschlingungsband verbunden sind, ist das Profilkörper-Gliederband (1) nur aus einer Form von identischen Profilkörpern (2) gebildet, deren trapezförmiger Plattenkörper an einer Seite eine ebene Oberfläche (3) mit einer in der Neutrallinie des Gliederbandes liegenden walzenförmigen Stegrippe (4) aufweist und an der anderen Seite eine parallele obere Oberfläche (5) und eine geneigte untere Oberfläche (6) und eine in der Neutrallinie des Gliederbandes liegende walzenförmige Ausnehmung (7) aufweist sowie an der Oberkante der einen Seite eine Tasche (10) und an der Oberkante der anderen Seite eine Nase (11) aufweist.

FIG. 2

## Profilkörper-Gliederband für stufenlos regelbare Kegelscheiben-Umschlingungsgetriebe

Die Erfindung bezieht sich auf ein Profilkörper-Gliederband für stufenlos regelbare Kegelscheiben-Umschlingungsgetriebe, der im Oberbegriff des Patentanspruches 1 erläuterten Art.

Aus der DE-PS 11 37 609 ist ein Profilkörper-Gliederband für stufenlos regelbare Kegelscheiben-Umschlingungsgetriebe bekannt, bei dem eine Vielzahl von Profilkörpern mit benachbarten Profilkörpern über etwa auf der Neutrallinie des Gliederbandes liegende Verbindungsflächen gelenkig zu einem endlosen Umschlingungsband verbunden sind.

Das bekannte Profilkörper-Gliederband weist den Nachteil auf, daß es zwei unterschiedliche Sätze von Profilkörpern aufweist, von denen jeweils ein benachbarter äußerer Profilkörper mit einem inneren Profilkörper und weiter mit einem benachbarten äußeren Profilkörper in hakenförmigem Eingriff steht und daß um ein Auseinanderfallen der einzelnen Profilkörper in radialer Richtung zu vermeiden sich vertikal zur Zugrichtung des Gliederbandes erstreckende Bolzen/Scheibenanordnungen vorgesehen werden müssen.

Dementsprechend ist ein solches Profilkörper-Gliederband vehältnismäßig aufwendig in der Herstellung und in der Montage, so daß entsprechende Kosten entstehen.

Die Aufgabe der Erfindung ist es, ein Profilkörper-Gliederband für stufenlos regelbare Kegelscheiben-Umschlingungsgetriebe der im Oberbegriff erläuterten Art zu schaffen, das einen wesentlich geringeren Herstellungs-und Montageaufwand erfordert, indem nur eine Form von identischen Profilkörpern verwendet wird und zusätzliche Halte- oder Verbindungselemente zum Zusammenhalten des Gliederbandes vermieden werden.

Aus der EP-PS 00 14 492 ist ein Plattengliederband für stufenlos regelbare Kegelscheiben-Umschlingungsgetriebe bekannt, das aus einer Vielzahl von eng aneinanderliegenden profilierten Plattengliedern besteht, die zueinander über Ausnehmungen und Nasen ausgerichtet werden, für deren Zusammenhalt in radialer Richtung jedoch mehrlagige flexible Metallbänder in entsprechenden Ausnehmungen der Plattenkörper aufgenommen werden müssen.

Dieses bekannte Plattengliederband besteht nur aus einer Form von identischen Plattengliedern, es weist jedoch den Nachteil auf, daß für den Zusammenhalt in Form eines endlosen Umschlingungsbandes eine Vielzahl von schwierig zu fertigenden hochflexiblen Stahlbändern erforderlich sind, die in die Plattenglieder entweder von beiden Seiten her oder von oben oder einer Seite her eingefädelt werden müssen. Die Herstellung dieser flexiblen Stahlbänder ist daher sehr aufwendig und teuer.

Gemäß der Erfindung wird die eingangs erläuterte Aufgabe gelöst, indem ein Profilkörper-Gliederband für stufenlos regelbare Kegelscheiben-Umschlingungsgetriebe der im Oberbegriff des Patentanspruches 1 erläuterten Art die im Kennzeichenteil des Patentanspruches 1 aufgezeigten Merkmale aufweist.

Dadurch, daß das Profilkörper-Gliederband nur aus einer Form von identischen Profilkörpern gebildet ist, deren trapezförmiger Plattenkörper an einer Seite eine ebene Oberfläche mit einer in der Neutrallinie des Gliederbandes liegenden walzenförmigen Stegrippe aufweist und an der anderen Seite eine parallele obere Oberfläche und eine geneigte untere Oberfläche und eine in der Neutrallinie des Gliederbandes liegende walzenförmige Ausnehmung aufweist sowie an der Oberkante der einen Seite eines Profilkörpers eine Tasche und an der Oberkante der anderen Seite des Profilkörpers eine Nase aufweist, mittels denen die aufeinanderfolgenden Profilkörper gelenkig zusammenwirken, können die einzelnen identischen Profilkörper bei der für die vorbestimmten möglichen minimalen Krümmung quer zur Zugrichtung des Profilkörper-Gliederbandes eingeschoben werden und bei im Zug- oder Schubtrum gestreckter Lage des Profilkörper-Gliederbandes übernehmen die zusammenwirkenden Taschen und Nasen eine Sicherung gegen ein Auseinanderfallen der Profilkörper quer zur Zugrichtung.

Die seitliche Sicherung gegen ein Auseinanderfallen liegt bei einem endlosen Profilkörper-Gliederband gemäß der Erfindung im Krümmungsbereich nicht vor, so daß in demontiertem Zustand des Profilkörper-Gliederbandes eine Transportsicherung vorgesehen werden muß. Im Betrieb eines solchen endlosen Umschlingungsbandes befinden sich jedoch die Krümmungsbereiche des Profilkörper-Gliederbandes jeweils zwischen den entsprechenden Kegelscheiben so daß im montierten Zustand eine zusätzliche axiale Sicherung gegen ein Auseinanderfallen nicht erforderlich ist.

Im Anspruch 2 ist eine weitere Ausführungsform eines Profilkörper-Gliederbandes aufgezeigt, bei der eine Krümmung des Profilkörper-Gliederbandes im Betrieb nicht nur in einer Richtung sondern auch in der entgegengesetzten Richtung möglich ist.

Die Erfindung wird anhand zweier in den beiliegenden Zeichnungen gezeigter Ausführungsbeispiele näher erläutert. Es zeigt:

Fig. 1 a, b und c einen Profilkörper für ein erfindungsgemäßes Gliederband in Draufsicht, Seitenansicht und Frontansicht;

Fig. 2 zeigt eine Schrägrißdarstellung des Profilkörpers nach Fig. 1;

Fig. 3 a, b und c eine weitere Ausführungsform eines Profilkörpers eines erfindungsgemäßen Gliederbandes in Draufsicht, Seitenansicht und Frontansicht;

Fig. 4 eine Schrägrißansicht des Profilkörpers nach Fig. 3;

Fig. 5 eine Seitenansicht einer Anzahl von im gekrümmten Trum zusammenwirkender Profilkörper nach den Fig. 1 und 2 und

Fig. 6 eine Anzahl von in einem gestreckten Trum zusammenwirkenden Profilkörpern nach den Fig. 1 und 2.

Ein Profilkörper-Gliederband 1 besteht aus einer Vielzahl von trapezförmigen Profilkörpern 2 die an einer Seite eine ebene Oberfläche 3 mit einer in der neutralen Linie des Gliederbandes liegende walzenförmige Stegrippe 4 aufweist.

Die Profilkörper 2 weisen an einer Seite eine parallel zur Oberfläche 3 liegende ebene Oberfläche 5 und eine hierzu geneigt verlaufende ebene Oberfläche 6 auf.

Auf der anderen Seite jedes Profilkörpers 2 ist eine in der neutralen Linie des Gliederbandes liegende walzenförmige Ausnehmung 7 etwa in der Mittelebene des Profilkörpers 2 ausgebildet.

Selbstverständlich sind die Übergänge von den ebenen Oberflächen 5 und 6 zur walzenförmigen Ausnehmung 7 mit entsprechenden Abrundungen 8 versehen und ebenso sind die Übergänge zwischen der ebenen Oberfläche 3 auf der anderen Seite jedes Profilkörpers 2 zur walzenförmigen Stegrippe 4 mit entsprechenden Ausrundungen 9 versehen.

Die Lage der über die ebene Oberfläche 3 der Profilkörpers 2 vorragenden walzenförmigen Stegrippen 4 ist in Zusammenhang mit der im Innern der Profilkörper 2 ausgebildeten walzenförmigen Ausnehmungen 7 so gewählt, daß die Achse der walzenförmigen Ausnehmungen 7 ideal betrachtet in der Mitte der Profilkörper 2 mit einer Dicke d liegt, während die Achse der vorspringenden walzenförmigen Stegrippe 4 um die Hälfte der Dicke d über die ebene Oberfläche 3 der Profilkörper 2 vorragt.

Selbstverständlich sind für die als Schwenkgelenk zusammenwirkende walzenförmige Stegrippe 4 und die walzenförmige Ausnehmung 7 entsprechende toleranzmäßige Überlegungen insbesondere auch im Hinblick auf die entsprechenden Abrundungen 8 und Ausrundungen 9 zu treffen, die im wesentlichen von dem für das Profilkörper-Gliederband vorgesehenen kleinsten Umschlingungsradius abhängig sind.

An der Oberkante der einen Seite jedes Profilkörpers 2 ist etwa in der Mitte eine rechteckförmige Tasche 10 ausgebildet und an der anderen Seite ist an der Oberkante eine rechteckförmige Nase 11 ausgebildet, die bei gestreckter Lage des Profilkörper-Gliederbandes die miteinander nur über die Wälzkörper-Verbindung zusammengeschobenen Profilkörper 2 gegen ein seitlich quer zur Zugrichtung des Gliederbandes 1 mögliches Auseinanderfallen sichern.

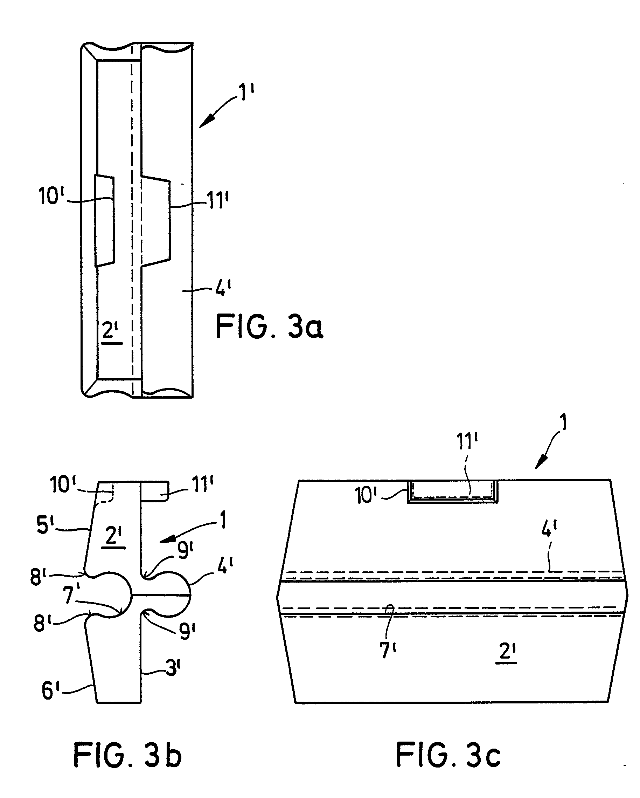

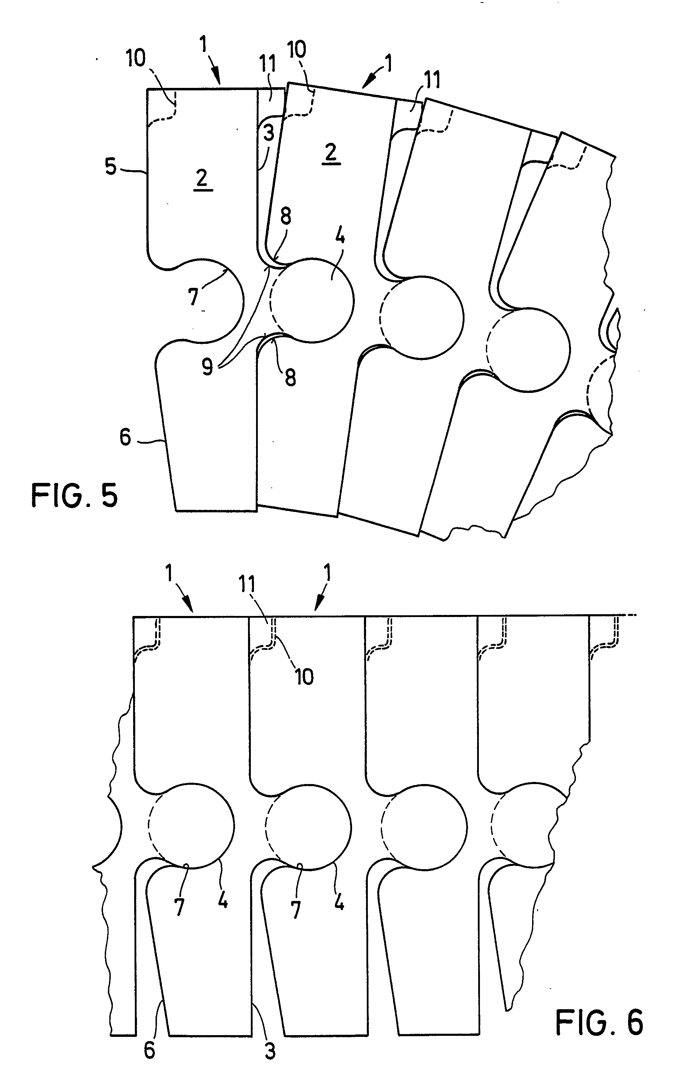

Betrachtet man nun die Schrägrißdarstellung der Fig. 2 in Verbindung mit den Fig. 5 und 6, so kann man leicht ersehen, daß die Auslegung der zusammenwirkenden Walzenflächen in der Ausnehmung 7 und an der Stegrippe 4 in Verbindung mit der Auslegung der geneigten Oberfläche 6 und der Tiefe der Taschen 10 bzw. der Höhe der Nasen 11 derart gewählt werden kann, daß zwei benachbarte Profilkörper 2 bei Anlegen ihrer ebenen Oberfläche 3 gegen die untere geneigte Oberfläche 6 des nächsten Gliedes seitlich entlang der Wälzkörper-Verbindung eingeschoben werden können.

Sobald das Profilkörper-Gliederband in eine gestreckte Lage gebracht wird, verriegeln die Taschen 10 in Verbindung mit den Nasen 11 das Band gegen ein seitliches Auseinanderfallen.

Während des Transportes eines zu einem endlosen Umschlingungsband zusammengefügten Profilkörper-Gliederbandes gemäß der Erfindung muß dementsprechend eine Transportsicherung in den gekrümmten Bereichen in Form einer geeigneten Verpackung aus Karton oder Kunststoff vorgesehen werden, sobald jedoch das endlose Umschlingungsband zwischen den auf einer Primärwelle und einer Sekundärwelle angeordneten zwei einander gegenüberliegenden Kegelscheiben angeordnet ist, übernehmen diese Kegelscheiben die Sicherung des Gliederbandes gegen ein seitliches Auseinanderfallen in den gekrümmten Bereichen.

Das erfindungsgemäße Profilkörper-Gliederband erfordert dementsprechend nur die entsprechenden Herstellungseinrichtungen für eine Form von identischen Profilkörpern und diese können heute z.B. durch Sinterpressen, Feinprägen, Profilwalzen mit nachfolgenden Feinprägevorgängen in äußerst kostengünstiger Weise und in der erforderlichen Maßhaltigkeit hergestellt werden.

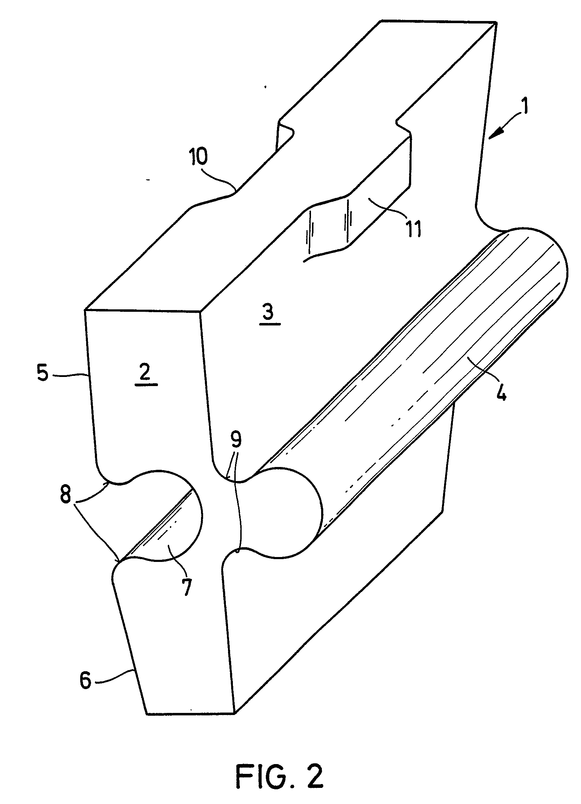

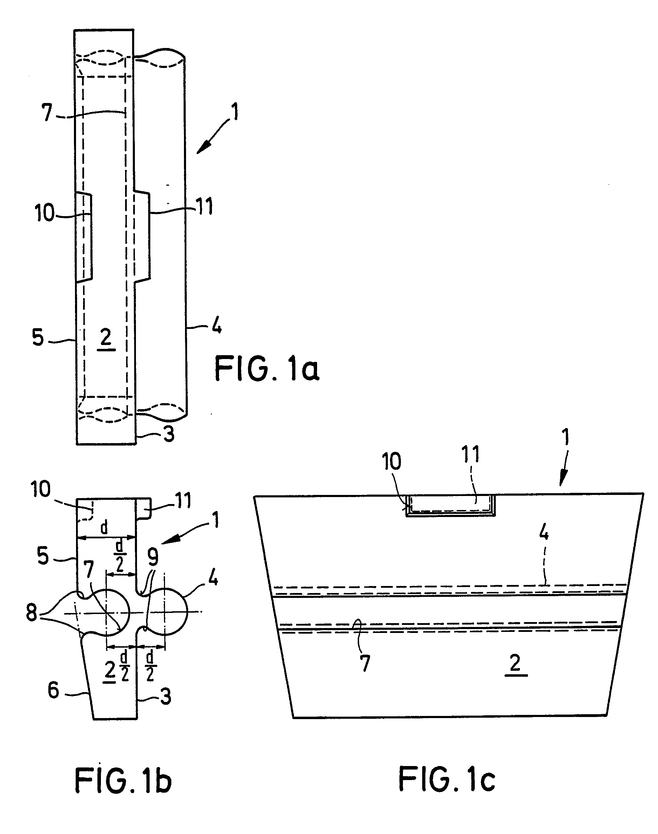

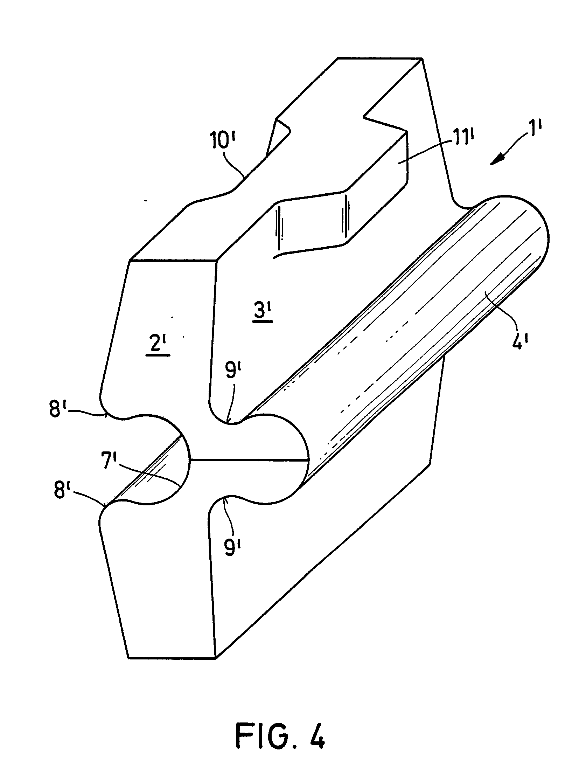

Bei dem in den Fig. 3 und 4 gezeigten Profilkörper für ein erfindungsgemäßes Profilkörper-Gliederband, das auch Krümmungen nicht nur in der einen Richtung sondern auch in der entgegengesetzten Richtung bis zu einem bestimmten Grade zuläßt, wurden der Einfachheit halber die gleichen Bezugszeichen wie in den Figuren 1 und 2 verwendet, wobei diese jeweils mit einem Strichindex versehen wurden.

Eine weitergehendere Erläuterung der Ausführungsform dieses Profilkörpers erscheint entbehrlich, nachdem die Funktionsweise im wesentlichen mit der des Profilkörpers in den Fig. 1 und 2 übereinstimmen. Es muß lediglich festgehalten werden, daß bei diesem Profilkörper auf der einen Seite auch die obere ebene Oberfläche 5′ geneigt ausgeführt ist und die entsprechende Ausbildung der Tasche 10′ in Verbindung mit der Nase 11′ muß natürlich so erfolgen, daß die vorgesehenen Krümmungen nach beiden Seiten durchlaufen werden können, ohne daß es hierbei zu Verklemmungen bzw. zu einem seitlichen Auseinanderfallen, d.h. außer Eingriffkommen zwischen der Tasche 10′ und der Nase 11′ kommt.

Es muß noch darauf hingewiesen werden, daß selbstverständlich die Form der walzenförmigen Ausnehmung und des walzenförmigen Steges ggf. abweichend von einer Kreisform ausgebildet werden können unter der Voraussetzung, daß die geforderte Gelenkfunktion aufrechterhalten bleibt.

Das gleiche gilt für die im Ausführungsbeispiel als rechteckige Taschen und Nasen ausgebildeten Sicherungen, diese können selbstverständlich auch in Form von halbrunden Vertiefungen und Erhebungen und nicht nur in der Mitte sondern eventuell zu beiden Seiten ausgebildet und angeordnet werden.

## Ansprüche

1. Profilkörper-Gliederband für stufenlos regelbare Kegelscheiben-Umschlingungsgetriebe mit einer Vielzahl von Profilkörpern, die mit benachbarten Profilkörpern über etwa auf der Neutrallinie des Gliederbandes liegenden Verbindungsflächen gelenkig zu einem endlosen Umschlingungsband verbunden sind, **dadurch gekennzeichnet,** daß das Profilkörper-Gliederband (1) nur aus einer Form von identischen Profilkörpern (2) gebildet ist, deren trapezförmige Plattenkörper an einer Seite eine ebene Oberfläche (3) mit einer in der Neutrallinie des Gliederbandes liegenden walzenförmigen Stegrippe (4) und an der anderen Seite eine parallele obere Oberfläche (5) und eine geneigte untere Oberfläche (6) und eine in der Neutrallinie des Gliederbandes liegende walzenförmige Ausnehmung (7) aufweisen sowie an der Oberkante der einen Seite eine Tasche (10) und an der Oberkante der anderen Seite eine Nase (11) aufweisen.

2. Profilkörper-Gliederband nach Anspruch 1, **dadurch gekennzeichnet,** daß an einem Profilkörper (2′) mit doppel-trapezförmigen Plattenkörper die der ebenen Oberfläche (3′) mit der walzenförmigen Stegrippe (4′) abliegende obere Oberfläche (5′) gleichfalls geneigt ausgeführt ist und die an deren Oberkante ausgebildete Tasche (10′) mit einer entsprechend angepaßten verlängerten Nase (11′) zusammenwirkt.

3. Profilkörper-Gliederband nach den Ansprüchen 1 und 2, **dadurch gekennzeichnet,** daß die auf der Neutrallinie des Gliederbandes liegende Wälz körper-Verbindung (4/7) eine von der Kreisform abweichende die Gelenkbewegung sicherstellende Querschnittsform aufweist und die an der Oberkante vorgesehene Taschen-Nasen-Sicherung (10/11) verschiedene geometrische Ausführungen und/oder Mehrfachanordnungen aufweisen kann.

FIG. 2

FIG. 1a

FIG. 1b

FIG. 1c

FIG. 3a

FIG. 3b

FIG. 3c

FORD/D-777

FIG. 4

FIG. 5

FIG. 6